# EUROPEAN PATENT SPECIFICATION

(11) **EP 2 040 534 B1**
(45) Date of publication and mention of the grant of the patent: **30.12.2015**
(21) Application number: 07793853.8
(22) Date of filing: 13.07.2007
(51) Int. Cl.: A01K 1/015

(54) **PARTICULATE CLUMPING ANIMAL LITTER MATERIAL AND PROCESS FOR THE PRODUCTION THEREOF**
TEILCHENFÖRMIGES KLUMPENBILDENDES TIEREINSTREUMATERIAL UND VERFAHREN ZU SEINER HERSTELLUNG
MATIÈRE DE LITIÈRE AGGLOMÉRANTE PARTICULAIRE POUR ANIMAUX ET PROCÉDÉ DE FABRICATION

(30) Priority: 14.07.2006 US 830610 P; 14.07.2006 EP 06117220
(43) Date of publication of application: 01.04.2009
(73) Proprietor: Sivomatic BV, 4782 PX Moerdijk (NL)
(72) Inventor: VANNIEUWENHUIJZEN- VAN ROOIJEN, Yvonne, Margaretha, NL-4794 RS Heijningen (NL); VERSEVELDT, Peter, Herbert, NL-4847 TH Teteringen (NL)
(74) Representative: Nederlandsch Octrooibureau
(86) International application number: PCT/NL2007/050352
(87) International publication number: WO 2008/007963

(56) References cited:
- WO-A-02/088026
- WO-A2-02/056673
- US-A- 3 765 371
- US-A- 5 735 232

## Description

### Field of the invention

The present invention relates to a particulate clumping animal litter material and a process for the production thereof.

### Background of the invention

There are an increasing number of households that have one or more pets. The excrements (urine and faeces) of domesticated animals such as cats have to be removed and are usually caught in litter. The performance of the litter product in the litter box can vary greatly, depending upon the precise nature of the product. Key attributes of a litter product that are of importance to pet owners are moisture control and odour control.

Originally cat litter products were relatively unsophisticated, and of the type known today as "non-clumping". More recently, clumping type cat litters have been introduced. With both types, solid excretions are scooped out of the litter box. However, clumping litters provide great advantages with respect to the way in which urine excretion is handled. Non-clumping litters absorb the urine and hold it until ammonia-type and/or sulphide-type malodours develop, at which time the entire content of the litter box is removed and replaced. Clumping litters, however, are designed to clump when wetted by urine, and the urine soaked granules agglomerate into clumps whose mechanical strength facilitates their removal in the same manner as solid waste is removed, leaving the remaining litter fresh and urine-free.

Litter products have been made with natural substrates or artificial substrates. Natural substrates that have been used include minerals, usually types of clay, or organic matter, usually agricultural by-products, wood products or paper derivatives. Artificial litter particles have generally comprised granules combining several materials of an absorbent nature, aggregated together with a binder to form a granule. These prior art aggregated granules are of a single component nature: all their ingredients are mixed together into one more or less homogeneous entity. Clumping litters are often made from bentonite. Such litters provide a good and relative long odour control. Bentonite is a montmorillonite based swelling mineral of the clay category, with a unique ability to clump and agglomerate when wetted, creating scoopable clumps.

The market for cat litter may be split in mineral and non-mineral cat litters; mineral based cat litters may be split into clumping and non-clumping cat litters. Non-clumping cat litters are produced of sepiolite, attapulgite, moler clay, illite, oil shale or similar minerals. The average density of these products is between 500 and 750 grams per litre. This is clearly below clumping cat litter. Therefore these products are also known as light weight cat litter. Clumping cat litters are usually produced from sodium or calcium bentonite and have an average density of 900 to 1200 grams per litre. These products are also known as heavy weight cat litters.

WO 02/056673 discloses a particulate animal litter material comprising a mixture of clay particles and silica gel particles. As described in WO 02/056673, silica gel particles were known as animal litter material, with the capability of absorbing odours. The invention described in WO 02/0056673 is based on the discovery that silica gel particles can serve as effective odour control agent when mixed with conventional clay litter. The litter described in WO 02/056673 comprises 5-50 % (w/w) of silica particles and 50-95 % (w/w) of clay particles.

WO 02/088026 discloses a method of preparing a material suitable for use as a litter by by reacting silica with calcium oxide by homogenising them in water, moulding, autoclave curing, comminuting, drying and classifying. The homogenisation is performed by dispersing the solid starting materials in water while adding an anionic surfactant that has previously been converted in water into a microporous stable foam.

US 3,765,371 discloses a system for animal excrement control which comprises the use of plastics such as foamed plastics capable of adsorbing and/or absorbing excrement. These may be employed as such, or may be impregnated with an additive such as a bactericide, an antioxidant, a deodorizer, chlorophyl, surfactants, dyes, etc.

A further example of a clumping litter is described in US2004/0079293. This document discloses a cellulose based animal clumping-type litter product comprising cellulose-based core particles that are covered with specially designed water-permeable coatings. Another sample of an animal litter is a woodbased litter described in DE10336383.

### Summary of the invention

Disadvantages of prior art litters, such as prior art cat litters, are for instance a relatively high bulk density or a low or insufficient clump strength.

Hence, it is an object of the invention to provide an alternative clumping animal litter material, especially a pet litter, which preferably has a relatively low bulk density and/or sufficient or better clump strength.

To that end, the invention provides a particulate clumping animal litter material comprising bentonite dust, a filler material, and optionally a coagulant, wherein the material comprises 50-95 wt.% bentonite dust, wherein the particles of the particulate clumping animal litter material have a weight averaged particle size in the range of 0.25-8 mm and wherein the particulate clumping animal litter material has a bulk density equal to or less than 700 gram/l, and wherein the filler material comprises a protein based foam.

In another aspect, the invention provides a process for the production of a particulate clumping animal litter material comprising:
a. mixing a first starting material and a second starting material, the first starting material comprising bentonite dust having a weight averaged particle size equal to or less than 1 mm, and optionally a coagulant, and the second starting material comprising a filler material, and wherein especially the filler material comprises a protein based foam;
b. drying the product obtained in step a); and
c. optionally further processing the product thus obtained to animal litter particles having a weight averaged particle size in the range of 0.25-8 mm.

In yet another aspect, the invention provides the use of a protein based foam for the production of a light weight particulate clumping animal litter material.

The invention advantageously provides an alternative clumping animal litter material that may have good clump strength, adsorbs excrements, and is light weight, which is advantageous for the consumer and during transport. Whereas "heavy weight" litters such as bentonite litter clump well (heavy weight litters adsorb liquids well), but traditional light weight litters of the art clump relatively bad, the particulate clumping animal litter material of the invention is light weight *and* clumps well. While having the advantage over heavy weight animal litter of having a lower weight, it nevertheless has the same appearance as heavy weight animal litter. Further, the animal litter may advantageously form upon contact with aqueous liquids a relatively round clump.

### Detailed description

The invention provides a particulate clumping animal litter material. Such particulate clumping animal litter material is herein also indicated as "litter" or "animal litter" or "particulate litter material". It especially refers to pet litter, more especially to cat litter but the litter may also used for example in boxes or other residences of rodents, dogs, etc. Litter is for instance used in cat litter boxes or trays to absorb moisture from cat faeces and urine, reducing malodours such as ammonia and sulphide type odours. Herein, the term "animal litter" especially refers to cat litter as known in the art, but may also refer to litter used for (boxes, etc. of) other animals such as rodents, dogs, birds, etc. In general, the term "animal litter" is used herein.

A main characteristic of clumping cat litter is its property to form a clump when it comes in contact with excrements (urine and/or faeces). The clumps lock in the mal odours. The clumps may be scooped out and the rest of the animal litter tray stays clean. Only seldom, total cleaning of the litter tray is needed. Therefore clumping animal litter is very economical. A disadvantage of the clumping cat litter of the prior art may be its high bulk density, which makes the cat litter very heavy to transport from mine to market and heavy to carry for the consumer. Further, non-clumping cat litter absorbs the moisture (urine). After a couple of days up to 1 week the litter tray has to be totally renewed. Therefore this material is less economical in use than clumping cat litter.

Transport costs from mine to market (retailer) are one of the most important cost components of cat litter. A key trigger in transport costs of cat litter is the weight and therefore the density. Therefore, reduction of the density saves costs and is desired. In addition, also the consumer benefits from a relative low bulk density. The consumer fills the litter tray with a certain volume (layer) of cat litter independent of the weight. The lower the weight/density, the better it is when carrying from shop to home, when filling the litter tray, when cleaning the litter tray and for disposal of used material.

### Betonite and swelling clays

Bentonite is a mineral comprising a swelling clay, especially montmorillonite, as known to the skilled person. Bentonite is for instance found in the US, Spain, Greece, Turkey, Bulgaria, Cyprus, and India.

Clays are known in the art and in general comprise a very fine-grained soil that is plastic when moist but hard when dried. The clays used in the animal litter of the invention preferably comprises Smectite type swelling clay, such as one or more clays selected from the group consisting of beidellite, montmorillonite, nontronite, pyrophyllite, saponite, sauconite, and hectorite. Smectites are known in the art, see for instance Chemical Weathering of Silicate Minerals from F.C. Loughnan or The Industrial Minerals HandyBook from Peter W. Harber, Industrial Minerals Division, London, UK 1992. Smectites are a type of minerals that tends to swell when exposed to water. Preferably, the smectites clays comprises one or more clays selected from the group consisting of beidellite, montmorillonite, nontronite, saponite and hectorite, more preferably the swelling clay comprises Montmorillonite. Montmorillonite, as known in the art, is an aluminium silicate (smectite) with a 2:1 layer structure composed of two silica tetrahedral sheets and a shared aluminium and magnesium octahedral sheet. Montmorillonite has a permanent negative charge that attracts interlayer cations that exist in various degrees of hydration thus causing expansion and collapse of the structure (i.e., shrink-swell). Smectite clays are also known under other names such as Fuller's earth, Bentonite, etc. Fuller's earth comprises the minerals montmorillonite or palygorskite (attapulgite) or a mixture of the two; some of the other minerals that may be present in fuller's earth deposits are calcite, dolomite, and quartz. Bentonite, as known in the art, includes minerals of the smectite group. Bentonite is clay material composed principally of the mineral montmorillonite. It has a great affinity for fresh water and when hydrating it may increase its volume more than seven times. In the invention, calcium (Ca) bentonite and/or sodium (Na) bentonite may for instance be used, but preferably Ca-bentonite is used. In another preferred embodiment, Na-bentonite is used. In a specific embodiment, bentonite is applied that is impregnated with a sodium salt, such as Na₂CO₃ (also called soda ash), preferably a Ca-bentonite is used which is impregnated with Na₂CO₃ or at least partially ion exchanged with sodium ions. Impregnation or ion exchange of smectites, such as bentonite is known in the art. Other materials such as one or more selected from the group consisting of kaolin, glauconite, chlorite, vermiculite, Luvos earth, Friedländers Ton, feldspar, wollastonite, pumice, rottenstone, and slate flour may also be used.

Herein, the "clay mineral" or "clay mineral dust" is indicated as "bentonite" or "bentonite dust", respectively. As mentioned below, bentonite comprises one or more of the above mentioned swelling clays, preferably montmorillonite. Other minerals than bentonite may also be applied. In a specific embodiment, bentonite (dust) refers to clay minerals (dust) in general, comprising at least about 30 wt.% of a swelling clay, more preferably at least about 45 wt.%, even more preferably at least 60 wt.% swelling clay. Preferably, the swelling clay comprises montmorillonite (see further also below).

### First starting material

As mentioned above, the particulate clumping animal litter material of the invention comprises bentonite dust and optionally a coagulant (The bentonite dust mixed with the optional coagulant (see also below) is indicated as first starting material).

### Bentonite dust

The production of regular bentonite cat litter results into about 30% dust. Herein, the terms "bentonite dust" or "dust" refer to particulate bentonite or another particulate swelling clay (see text below) having a bulk weight averaged particle size of equal to or smaller than 1 mm, more preferably equal to or smaller than 0.25 mm. Some producers recycle this dust into their production system, for instance by extrusion or compacting. Others sell the dust for different applications. Again others consider it a waste product and dispose it or throw it back in the mine. In all cases, the dust is a cost factor. The present invention offers in an embodiment an added value application of the dust residue and therefore a cost saving.

The particulate animal litter material according to the invention comprises 50-95 wt.% (relative to the total weight of the animal litter material) of bentonite dust. Even more preferably, the material according to the invention comprises 60-95 wt.% bentonite dust. Herein, the weight percentages are relative to the total weight of the litter material according to the invention. As described above, this dust may be a by-product of regular cat litter production. Preferably, the dust has a bulk weight averaged particle size of equal to or smaller than 1 mm, more preferably equal to or smaller than 0.25 mm. Preferably, the dust comprises particulate material wherein at least 80 wt.% of the particles of the dust particulate material has a particle size equal to or smaller than 1 mm, more preferably equal to or smaller than 0.25 mm. More preferably, at least 90 wt.%, yet even more preferably at least 95 wt.% of the particles of the dust has a particle size equal to or smaller than 1 mm, more preferably equal to or smaller than 0.25 mm. Preferably, 80 wt.% of the particles of the bentonite dust, more preferably at least 90 wt.% has a particle size in the range of 0.001-1 mm, more preferably in the range of 0.001-0.25 mm.

The bentonite dust, as for instance obtained during the production of cat litters or other production processes wherein swelling clays are used, preferably comprises a water content of about 2-20 wt.%, preferably about 5-15 wt.% water, more preferably about 7-12 wt.% (relative to the total weight of the dust).

Preferably, the bentonite dust used comprises at least 30 wt.% of swelling clay belonging to the smectite group, preferably montmorillonite. Even more preferably, the bentonite dust (used as first material, see also below) comprises at least 45 wt.% of a swelling clay belonging to the smectite group, preferably montmorillonite, even more preferably at least 60 wt.%. Bentonites having a higher swelling clay content (preferably montmorillonite), such as 80 wt.% or higher, may also be applied. Bentonites having a montmorillonite content of 95 wt.% or higher are known. Other materials such as sepiolite, attapulgite, etc. may be admixed or may naturally be present in the dust basis material, as known to the person skilled in the art. Preferably, bentonite dust is swellable to at least 1 times its own weight, more preferably at least 2 times its own weight. This implies that bentonite dust, used as first starting material (optionally in combination with a coagulant, see below), may adsorb at least 100 % of its own weight, preferably at least 150 %. Preferably, the bentonite dust material is swellable to 2-4 times its own weight, more preferably 2-5 times its own weight, or even more.

### Coagulant

The particulate animal litter material of the invention may optionally further comprise a coagulant. The coagulant or thickener may preferably be used to coagulate the dust particles of the swelling clay. The coagulant may for instance be a natural or synthetic thickening agent or a natural or synthetic emulsifier, as known in the art (such as E400-E418, E430-E436, E440-E442, E460-466, E470-E484, E491-E495, E543-E546, E1000, E1200, E1201, E1400-E1404, E1410-E1414, E1420-E1423, E1440-E1442, E1450, E1525). Preferably, the coagulant comprises one or more materials selected from the group consisting of agar agar, arabic gum, carrageenan, cellulose, cellulose derivatives, preferably non-ionic and mucoadhesive cellulose derivatives, particularly preferably methylcellulose (MC), carboxymethyl cellulose (CMC) or the salts thereof, hydroxypropyl cellulose (HPC), hydroxyethyl cellulose (HEC), hydroxypropyl methylcellulose (HPMC) or methylethyl-cellulose (MEC), polyvinyl alkylether-co-maleic anhydride or the salts thereof, gelatine, pectin, polyethylene glycols (PEG), polyvinyl alcohol (PVA), polyvinyl pyrrolidone (PVP), tragacanth, xanthan, chitosan, chitosan chloride, agarose, alginates, poloxamers, sodium phosphate, starch, such as potato starch, starch derivatives, guar gum, galactomannane, gellan gum, locust bean gum, polyacrylates, cross-linked acrylic polymers, poly(hydroxyethyl), poly(hydroxylpropyl)- and poly(hydroxypropyl methyl)methacrylates, jellify, jellify remedies, carbokernel flour and superabsorbers (such as polyacrylate, see also above). Preferably, the coagulant comprises one or more materials selected from the group consisting of carrageenan, cellulose, cellulose derivatives, preferably non-ionic and mucoadhesive cellulose derivatives, particularly preferably methylcellulose (MC), carboxymethyl cellulose (CMC) or the salts thereof, hydroxypropyl cellulose (HPC), hydroxyethyl cellulose (HEC), hydroxypropyl methylcellulose (HPMC) or methylethyl-cellulose (MEC), gelatine, xanthan, starch, such as potato starch, starch derivatives, carbokernel flour and superabsorbers (such as polyacrylate, see also above). Preferably, methylcellulose (E461) and/or carboxy methylcellulose (E466) are used. Herein the combination of bentonite dust and optional a coagulant is also indicated as "first starting material", see below. The coagulant is preferably provided as powder or as gel, or forms a solution or gel during the preparation.

### Second startling material

The particulate clumping animal litter according to the invention further comprises a filler material (also indicated as second starting material). Prior art materials usually comprise particles existing entirely of bentonite, or comprise a cellulose based core (as described above; for instance a wooden core) coated with bentonite dust. The filler material used in the animal litter of the invention is preferably a material that reduces the bulk density of the particulate clumping animal litter material of the invention but nevertheless gives a good consistency and good clump strength (see below). Preferably, the filler material maintains its "airy" structure such as whisked egg white or a gel even after a drying step during processing of the starting materials (see also below). Hence, the airy structure of the filler is preferably formed thermo-irreversible: the airy structure is hard (solid, stable) after providing heat but does substantially not weaken (soften) when cooling.

### Protein based foam such as whisked egg white

In accordance with the invention, the filler material comprises a protein based foam. Protein based foams are known in the art. Protein based foams are obtainable by for instance whisking protein containing products, such as powders, and water, thereby also providing the protein based foam. The protein containing product may for instance comprise whole egg powder.

In an embodiment, the protein of the protein based foam comprises an animal protein, such as proteins out of homes, bones and blood, but also proteins from animal products as for instance a poultry protein out of eggs, such as chicken ovalbumin. In yet another embodiment, the protein of the protein based foam comprises a synthetic protein, such as proteins out of micro-organismes and oil. Hence, in an embodiment, the protein of the protein based foam comprises an enzyme, i.e. the foam comprises an enzyme comprising foam composition. Such enzyme comprising foams are especially based on globular enzymes. Herein, the term "enzyme comprising foam composition" refers to a protein based foam wherein the protein comprises an enzyme.

The protein of the protein based foam may in an embodiment be selected from the group consisting of animal proteins and plant proteins. In a specific embodiment, the protein of the protein based foam comprises a plant protein selected from the group consisting of soy, potato, maize, pea, and cane (such as sugar cane) proteins. Also a combination of two or more types of proteins may be used. In another embodiment, the protein of the protein based foam comprises a poultry protein, such as chicken ovalbumin. Also a combination of one or more types of plant proteins and one or more types of animal proteins may be used. Preferred proteins are whey protein or those derived from poultry eggs, i.e. the protein of the protein based foam comprises a poultry egg protein, such as chicken ovalbumin. Protein based foams wherein the protein comprises or consists of poultry egg protein, such as chicken ovalbumin, are especially indicated as whisked egg white, as known to the person skilled in the art (see also below). As mentioned above, the protein of the protein based foam may also comprise an enzyme, such as a globular enzyme.

Especially good foams are obtained based on globular proteins. Proteins such as whey protein, such as undenatured whey proteins, casein, such as Na or Ca caseinate, and especially partly hydrolyzed casein, soy protein, pea protein, or ovalbumin are suitable as proteins.

Optionally emulsifiers may be present, i.e. the starting mixture for making the protein based foam may comprise water, protein and optionally emulsifiers, such as in an amount of 0.1-5 wt.% relative to the total starting mixture (for the protein based foam). Also bovine serum albumin, alpha-lactalbumin, β-lactoglobulin, immunoglobulin, lactoferrin, transferrin, may be applied as proteins.

Especially, the lipid amount in the starting mixture (for the protein based foam) is less than about 1.0 wt.%, especially less than 0.5 wt.%, more especially lower than about 0.05 wt.%, relative to the total amount of starting mixture.

Hence, in a preferred embodiment, the filler material comprises whisked egg white (egg white: in general the common name for the clear liquid (also called albumen or ovalbumin or glair) contained within an egg). Surprisingly, when mixing swelling clay powder such as bentonite, with whisked egg white, animal litter particles are obtained with good consistency, good clumping behaviour and good clumping strength. Whisked egg white is obtainable with methods known in the art.

Preferably, protein of animal origin is used, more preferably poultry egg white is used (i.e. isolated from poultry eggs), and even more preferably chicken egg white is used.

Other materials that may be beaten up (i.e. may be whisked), may also be used, such as soy protein, whey protein and milk protein.

The term "egg white" especially refers to egg white, as known in the art and as defined above In an embodiment also egg yolk may be used and in another embodiment, preferably whole egg powder (combination of egg white and egg yolk in powder form, preferably obtainable by spray drying) as protein containing product.

Herein, the term "whisked egg white" either refers to the clear liquid that can be derived from eggs, and subsequently whisking such liquid, thereby providing a protein based foam, as known to the person skilled in the art. Such protein based foam comprises animal proteins (poultry).

In an embodiment, the proteins of the protein based foam comprise proteins that denature over a range of about 55-90 °C.

The whisked egg white, or more in general, the protein based foam, comprises in an embodiment about 0.1-30 parts protein and 70-99.9 parts water, more especially 0.5-30 parts protein and 70-99.5 parts water. After mixing the protein based foam to the other starting materials including bentonite dust, the mixture is heated and part of the water from (amongst other things) the filler material such as a protein based foam, is evaporated, leading to the herein mentioned amounts of filler material in the particulate clumping animal litter material, such as 0.1-30 wt.% filler material. The protein based foam may further optionally comprise additives such as salt and/or the above mentioned emulsifiers.

The foam (i.e. before mixing with the other ingredients of the particulate clumping animal litter material) has in an embodiment an overrun greater than about 500%, especially greater than about 1000%, such as in the range of 500-2000%, more especially 600-1500%. Here, % overrun is defined in volume terms as ((volume of the final aerated product-volume of the foam mix before foaming)/volume of the foam mix before foaming)* 100 %.

Foams are known in the art and can be made by whisking or other methods (see below). The protein or protein containing product and water, and optional other components, are mixed until the protein based foam, i.e. filler material, is obtained. The airy structure of the filler material, i.e. the foam, is preferably formed thermo-irreversible: the airy structure is hard (solid, stable) after providing heat but does substantially not weaken (soften) when cooling.

Thus, in a specific embodiment, the invention provides a particulate clumping animal litter material comprising bentonite dust, a filler material, and optionally a coagulant, wherein the material comprises 50-95 wt.% bentonite dust wherein the particles of the particulate clumping animal litter material have a weight averaged particle size in the range of 0.25-8 mm and wherein the particulate clumping animal litter material has a bulk density equal to or less than 700 gram/l, such as less than 650 gram/l, or less than about 600 gram/l, or especially less than 550 gram/l, and wherein the filler material comprises a protein based foam.

### Bentonite gel

In addition to whisked egg white, one may also use bentonite gel as filler material. It is to be noted that the final product of the particulate clumping animal litter material according to this embodiment does actually not comprise a "bentonite gel", since products based on bentonite gel are dried (see below) and thereby lose the gel properties. Hence, bentonite gel as filler is herein also referred to as "filler material based on bentonite gel". Bentonite gels are known in the art and can for instance be prepared by mixing bentonite dust with water. Preferably the gel (for use in the process of the invention) comprises about 5-30 wt.% bentonite dust, the rest water, more preferably the gel comprises about 8-25 wt.%, even more preferably about 8-20 wt.% bentonite dust, the rest water.

### Finished Product

As described above, a particulate clumping animal litter material according to the invention comprising bentonite dust, a filler material, and optionally a coagulant, wherein the material preferably comprises 50-95 wt.% bentonite dust is provided. The other 5-50 wt.% comprises filler material, optional coagulant, and other optional additives such as perfumes, antibacterials, preservatives etc. (see also below). Preferably, the particulate clumping animal litter material according to the invention has a bulk density equal to or less than 700 gram/l.

Herein, the amounts of swelling clay, filler material, coagulants etc. are especially related to the dry weight of these materials unless indicated otherwise and unless related to the amount of water.

Herein, the phrase "wherein the material comprises 50-95 wt.% bentonite dust" and similar phrases refer to the bentonite content in the ready product based on bentonite dust as starting material. As will be clear to the person skilled in the art, the bentonite dust particles of the starting material have, together with the other components, agglomerated to large particles, which are processed into the desired particle size range. Hence, the phrase "50-95 wt.% bentonite dust" and similar phrases also refer to "50-95 wt.% bentonite". The bentonite content can be estimated according to methods known in the art (such as XRD). Preferably, the particulate animal litter according to the invention comprises 20-95 wt.% montmorrillonite (preferred main component of bentonite), more preferably, 30-85 wt.%.

In a specific embodiment of the invention, the particulate material comprises about 50-95 wt.% bentonite dust, 0.1-30 wt.% filler material, 1-15 wt.% coagulant and 1-15 wt.% water. In another a specific embodiment of the invention, the particulate material comprises about 50-95 wt.% bentonite dust, 0.1-20 wt.% filler material, 1-15 wt.% coagulant and 1-15 wt.% water. In a specific embodiment of the invention, the particulate material comprises about 50-95 wt.% bentonite dust, 3-30 wt.% filler material, 1-15 wt.% coagulant and 1-15 wt.% water. For instance, in a preferred embodiment, the material comprises about 60-95 wt.% bentonite dust, 1-15 wt.% coagulant, 1-15 wt.% water and 3-30 wt.% filler material. The amount is variable in these ranges. The sum of the individual amounts of the different components is 100%.

The amount of bentonite dust, filler material and optional coagulant here refers to the dry matter weight. Hence, a particulate material comprises 0.1-30 wt.% filler material (as described herein), comprises 0.1-30 wt.% dry matter filler material. When using a protein based foam, the filler material thus comprises 0.1-30 wt.% proteins. Hence, the phrases "comprising a filler material wherein the filler material comprises a foam", "a particulate material comprises 0.1-30 wt.% filler material" and similar phrases, refer to a ready particulate animal litter material that is based on such foam or based on 0.1-30 wt.% (relative to the total weight of the litter material). The phrase "a particulate material comprises 0.1-30 wt.% filler material" and similar phrases, refer to a ready particulate animal litter material that comprises or contains 0.1-30 wt.% (dry weight) of such filler material.

Preferably, the bentonite content of the particulate animal litter according to the invention is preferably about 65-95 wt.%. The water content is preferably about 5-13 wt.% (i.e. 5-13 wt.% moisture relative to the total product), more preferably about 7-10 wt.%. Especially a water content between about 5-13 wt.%, more especially 7-10 wt.% provides particles that do not "dust" (i.e. airborne dust is minimized). Further, in an embodiment, the coagulant content is preferably about 3-15 wt.% and the filler material is preferably about 3-25 wt.%, more preferably about 5-20 wt.%.

*Finished Product with filler based on whisked egg white or other protein based foams* In a specific embodiment, the particulate material according to invention comprises 50-95 wt.% bentonite dust, 0.1-30 wt.% filler material, 1-15 wt.% coagulant and 1-15 wt.% water.

In a preferred embodiment, the filler material comprises whisked egg white. In a specific embodiment of the invention, the particulate material comprises 50-90 wt.% bentonite dust, such as Ca-bentonite (optionally impregnated with a sodium salt), 3-30 wt.% whisked egg white, 1-15 wt.% coagulant, such as methyl cellulose, and 1-15 wt.% water. For instance, in a preferred embodiment, the material comprises 60-90 wt.% bentonite, such as Ca-bentonite, 3-10 wt.% coagulant, such as methyl cellulose, 5-13 wt.% water and 5-20 wt.% whisked egg white. Preferably, the particulate animal litter according to the invention comprises whisked egg white as filler material and about 65-85 wt.% bentonite, more preferably about 70-80 wt.%.

Especially preferred embodiments are given below in the table.

Preferred embodiments with whisked egg white as filler material (wt.%):

| | 1-15% moisture | | | 5-13% moisture | | | 7-10% moisture | | |
|---|---|---|---|---|---|---|---|---|---|
| Bentonite dust | 68.6 | - | 80 | 70.3 | - | 76.7 | 72.7 | - | 75.1 |
| Coagulant | 5.7 | - | 6.7 | 5.9 | - | 6.4 | 6.1 | - | 6.3 |
| Filler | 10.6 | - | 12.4 | 10.9 | - | 11.9 | 11.2 | - | 11.6 |
| Moisture | 15 | - | 1 | 13 | - | 5 | 10 | - | 7 |

In another embodiment, the filler material comprises an enzyme comprising foam composition, also indicated as enzyme comprising foam. An example of such foam is Lithofoam.

Preferred embodiment with Lithofoam¹ SL200-L as filler material (wt.%)

| | 1-15% moisture | | | 5-13% moisture | | | 7-10% moisture | | |
|---|---|---|---|---|---|---|---|---|---|
| Bentonite dust | 77.9 | - | 90.7 | 79.7 | - | 87.1 | 82.5 | - | 85.2 |
| Coagulant | 6.5 | - | 7.6 | 6.7 | - | 7.3 | 6.9 | - | 7.1 |
| Filler | 0.6 | - | 0.7 | 0.61 | - | 0.67 | 0.63 | - | 0.65 |
| Moisture | 15 | - | 1 | 13 | - | 5 | 10 | - | 7 |

| | | | | | | | | | |
|---|---|---|---|---|---|---|---|---|---|
| 1 From Dr. Lucà & Partner Ingernieurkontor GmbH (Lithofoam SL200-L is a protein substance, the proteins are enzymes which are produced by micro-organismes. | | | | | | | | | |

In the above embodiment, the filler material (filler) comprises an enzyme comprising foam composition. In a specific embodiment of the invention, the particulate material comprises about 50-95 wt.% bentonite dust, 0.1-20 wt.% filler material, wherein the filler material comprises an enzyme comprising foam, 1-15 wt.% coagulant and 1-15 wt.% water. As mentioned above, these amounts of bentonite dust, filler material and coagulant are based on the dry weight of these ingredients and are relative to the total weight of the particulate material.

The particulate litter particles of the invention are preferably designed to agglomerate into clumps when wetted. The highly absorptive and light weight litter of this invention substantially reduces litter box malodours and increases consumer convenience by substantially reducing the weight of the product in conventionally sized packaging. The particulate clumping animal litter material according to the invention can especially be used as cat litter. The particulate product according to the invention eliminates odours quickly and naturally with no need for added chemicals or perfumes to mask odours, although the product of the invention may also comprises additives such as perfumes, antibacterials, preservatives etc., such as salts or acids. Preferably salt (especially NaCl) is added, since surprisingly this also seems to stabilize whisked egg white. Further, acids like citric acid, acetic acid, lactic acid, etc. may be added, for instance as preservative or antibacterial. Preferably, one or more of these acids are added after having whisking egg white (in case egg white is used as filler material).

The product according to the invention is also safe and natural, and can be used by cats of all ages without substantial worry of ingestion, dust or allergy problems. The product is clumpable and scoopable and light weight. The clumps absorb odour quickly and are easy to scoop. The granules immediately attach themselves to the urine and droppings of the cat. In this way compact 'clumps' are created, instantly absorbing unpleasant odours. When the layer of animal litter in the box becomes too thin, it can simply be topped up. It is hardly ever necessary to clean the whole cat box, because the granules left behind remain clean and dry.

### Particle size

The particulate animal litter according to the invention comprises particles comprising bentonite dust, a filler material and optionally a coagulant. The particles of the particulate animal litter have a weight averaged particle size in the range of 0.25-8 mm. Preferably, the particles have a weight averaged particle size in the range of 2-6 mm. In another embodiment, the particle size of the particulate animal litter according is characterized in that at least 80 wt.% of the particles of the particulate material have particle sizes in the range of 0.25-8 mm, more preferably at least 90 wt.%, even more preferably at least 95 wt.%. Hence, according to an embodiment, there is provided a particulate clumping animal litter material wherein at least 80 wt.% of the particles of the particulate clumping animal litter material have particle sizes in the range of 0.25-8 mm. In a specific embodiment, at least 80 wt.%, more preferably at least 95 wt.% of the particles of the particulate material have particle sizes in the range of 0.25-8 mm. Preferably, at least 80 wt.%, more preferably at least 95 wt.% of the particles of the particulate material have particle sizes in the range of 0.25-6 mm.

In a specific embodiment, at least 80 wt.%, more preferably at least 95 wt.% of the particles of the particulate material have particle sizes in the range of 0.25-3 mm. In yet another specif embodiment, at least 80 wt.%, more preferably at least 95 wt.% of the particles of the particulate material have particle sizes in the range of 0.25-2.5 mm. In these embodiments, the weight averaged particle sizes are preferably in the ranges of 0.25-3 mm and 0.25-2.5 mm, respectively.

### Bulk density

The bulk density of the material is preferably equal to or less than 700 gram/l, such as equal to 650 gram/l or less, more preferably equal to or less than 600 gram/l, even more preferably equal to or less than 550 gram/l, yet even more preferably equal to or less than 500 gram/l. Hence, the bulk density of the particulate animal litter material is preferably between about 350 and 700 gram/l, more preferably between about 350 and 600 gram/l, even more preferably between about 350 and 550 gram/l, yet even more preferably between about 400 and 550 gram/l. As will be known to the person skilled in the art, the bulk density of the material may be estimated after an optional processing (for instance screening) of the material such that the desired particle sizes of 0.25-8 mm of the particulate animal litter material of the invention is obtained. The bulk density measured relates to the so-called "apparent bulk density". When measuring the same sample a number of times, it appears that the error is about 10 % (i.e. about 35-70 gram/l) or less. The bulk density of finer animal litters (for instance in the 0.25-3 cm particle size range) is not essentially different from coarse animal litters (for instance in the 0.25-8 cm particle size range). The bulk density is in an embodiment determined according to ASTM D1895-96 Method A or ISO method R60, with slightly modified dimensions of the funnel and measuring cup (see below). When comparing animal litter material based on particulated bentonite dust alone with animal litter material according to the invention (both having substantially the same particle size distributions and moisture contents), it appears that the bulk density of the latter is about at least 20 % lower, more preferably at least 30 % lower, even more preferably at least about 40% lower.

### Clump strength

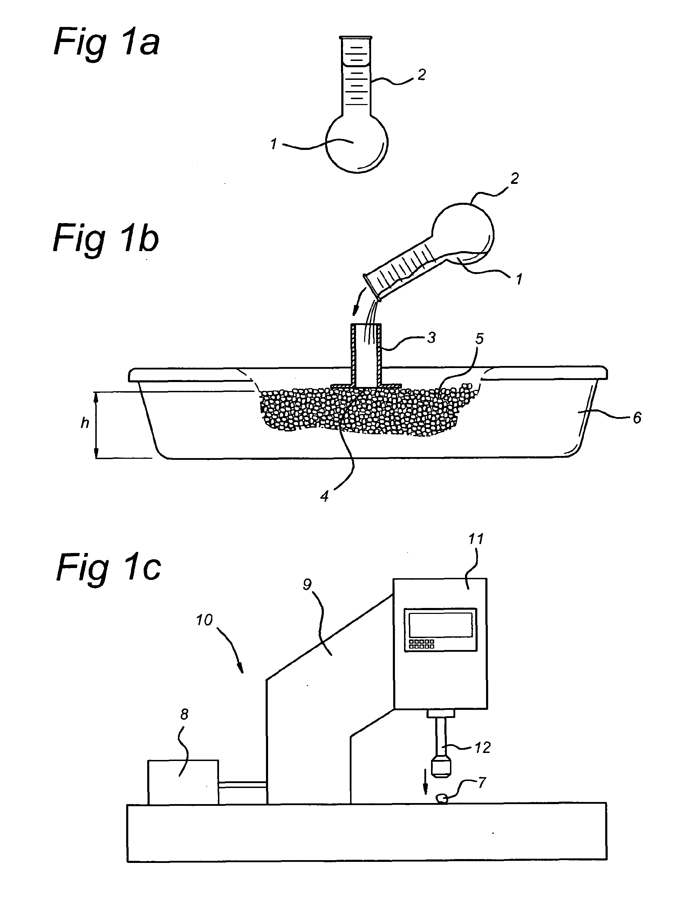

The clump strength is measured using an automatic setup with a digital force meter. Figures 1a-1c schematically show the process and setup for measuring the clump strength. Referring to figures 1a-1c, a standard amount 1 (for instance 10 ml) of liquid (usually water; for the experiments, a 0.250 M NaCl solution was applied), for instance using calibrated flask 2 is added preferably through a cylinder 3 on one spot 4 on animal litter 5, which is substantially evenly distributed in box 6 and which has a height h in box 6 of 5-7 cm. After letting the clump thus formed harden (due to the absorption of liquid) during a predetermined time (for instance 5 minutes) a force is applied to the hardened clump 7 until it breaks using the automatic setup (indicated with reference number 10). Setup 10 comprises a motor-driven test stand, including Chatillon motor-driven test stand LTCM-6 (reference number 8), which controls a force gauge 11, for instance a Chatillon Force Gauge DMF-10. The setup 10 further includes an aluminium base 9 designed for easy fixturing set up force gauge 11, with multiple mounting holes and an unusually large working area. With a rotary dial on the front of the stand 8 ram speed can be adjusted from 0.5 to 15 inches/min. During the experiments, the speed was selected to be 9 Inch/min. Gauge 12 lowers with the selected speed. Adjusting the DFM-10 on Kg and Peak, the highest force which is necessary to break the clump is measured. The value on the display of the DFM-10 is the clump strength. In such set up 10, the clump strength of different animal litters can be evaluated in order to compare the clump strengths of light weight and heavy weight litters of the art and of the light weight litter of the invention.

Other methods to measure the clump strength may also be applied. In general the clump strength of the animal litter according to the invention is comparable to clumping materials of the prior art or better, entirely based on bentonite, which are clumping animal litters not produced according to the process of the invention, and comparable to non-clumping animal litters. Further, the clump strength is in general better than animal litters based on wood, paper, pulp and other cellulosic based animal litters. Such prior art litters usually clump hardly, or only after a long time (hours to days), whereas the present clumping animal litter according to the invention clumps within minutes.

### Process

### Mixing

The particulate clumping animal litter material according to the invention is obtainable by a process according to the invention for the production of a particulate clumping animal litter material, the process comprising:
a. mixing a first starting material and a second starting material, the first starting material comprising bentonite dust, the bentonite dust having a weight averaged particle size equal to or less than 1 mm, and optionally a coagulant, and the second starting material comprising a filler material, and wherein especially the filler material comprises a protein based foam;
b. drying the product obtained in step a); and
c. optionally further processing the product thus obtained to animal litter particles having a weight averaged particle size in the range of 0.25-8 mm.
In an embodiment, the first starting material comprises a bentonite dust and a coagulant. The first starting material can be made in a process wherein the coagulant and bentonite dust are mixed to obtain the first starting material, before mixing with the second starting material. Mixing can be done by methods known in the art.

The second starting material comprises a filler material, or is the filler material. As indicated above, in an embodiment the second starting material comprises whisked egg white, obtainable by whisking egg white, and in another embodiment, the second starting material comprises bentonite gel, which is obtainable by mixing bentonite dust and water. When using bentonite gel as filler material, bentonite gel is preferably obtainable by mixing bentonite dust (as defined above) and water. As mentioned above, the second starting material may be any protein based foam, obtainable by whisking, or other methods of foaming, of a mixture of water an protein. Further, also other foams than protein-based foams may be applied.

In a specific embodiment, the first starting material is admixed to the second starting material. In another specific embodiment, the second starting material is admixed to the first starting material. Mixing may for instance be performed by using a mixer such as an intensive mixer. In a preferred embodiment, a mixing comprising a rotating mixing pan and a rotating mixing tool (rotor and/or shear) is used, as for instance provided by Maschinenfabrik Gustav Eirich GmbH &Co KG (such as mixers from the Eirich Intensivmischer Typ R series). In a specific embodiment, an apparatus is used comprising a mixer, preferably a rotating mixing pan mixer as described above, and a container for containing egg white, the container having an opening through which egg white is provided under pressure, such that whished egg white is formed, wherein the opening as arranged to provide whished egg white into the rotating mixing pan mixer. The similar apparatus may be used for adding bentonite dust as filler material (second starting material) to the first starting material. In yet another embodiment, the ingredients of the first and second starting material are mixed in an extruder, respectively. In a specific embodiment, the first and second starting materials are mixed in an extruder. Preferably, the mixture thus obtained is extruded to the desired particle size (see above), with methods known to the person skilled in the art.

After mixing, the water content may be higher due to the presence of water in the starting materials such as bentonite gel, a coagulant and egg white. Hence, the mixed product obtained at a) is dried to the desired water content.

Herein, the term "whisking" includes any method to make a foam from a liquid such as egg white. It may refer to whisking with a whisker or other means, whipping, mixing, spargeing, or other methods known to the person skilled in the art. To this end, also foam generators may be used, such as those from Haas-Mondomix or Ingenieurskontor Dr. Luca, or from Stroy Beton.

### Drying

Drying can be performed with methods known in the art such as heating by an oven (such as a rotating oven or drying belt), IR heating or microwave heating (for instance by using a magnetron). When using an oven, the material obtained after mixing is preferably heated between about 40 and 120 °C, more preferably between about 60 and 110 °C, even more preferably, the heating temperatures is below about 110 °C, more preferably below about 100 °C. The heating time is adjusted to the desired water content. Preferably, the heating time is 80 min or less, preferably between about 40-70 minutes. In a specific embodiment, drying is performed by heating in a rotating oven which is maintained at a temperature of about 500-700 °C, preferably 550-650 °C, more preferably around 600 °C for about 20-30 minutes. The dried product is removed from the oven at about 100 °C. After drying, the particulate clumping animal litter material comprises about 1-15 wt.% water.

### Crushing

In case the particles obtained after mixing and drying do not have the desired particle size, the product thus obtained can further be processed to the animal litter particles having a particle size in the range of 0.25-8 mm (preferably a weight averaged particle size in the range of 0.25-8 mm). If desired, the particle size of the particles in the particulate litter material can be reduced by crushing the particles. To obtain the desired particle size and/or particle size distribution, a crushing and/or screening step, for instance by sieving or using a cyclone, of the particles may also be introduced.

Hence, according to the invention whisked egg white or bentonite gel may surprisingly be used for the production of a light weight particulate animal litter material, especially a clumping animal litter material. Such animal litter may further be based on bentonite dust, but in a specific embodiment, bentonite gel or whisked egg white may also be used to produce particulate animal litter material based on wood, paper, wood pulp or paper pulp or combinations of two or more of these.

According to another aspect of the invention, bentonite clay (for instance as mined), is mixed with water to obtain a gel, preferably the above defined gel. Subsequently, the gel is dried to the desired water content (as described herein), and further processed to the desired particle (as described herein). In this way, also the particulate clumping animal litter according to the invention can be obtained. This litter may also comprise 50-95 wt.% bentonite and may also have the bulk density equal to or less than 700 gram/l. In a specific embodiment, the gel is not used per se, but is again used as filler material, which is mixed, as described herein, with the first starting material. For instance, a layer of first starting material is provide, on top of this layer a layer of the bentonite gel is provided and subsequently on this bentonite gel layer, a second layer of first starting material is provided (see also below). After mixing and drying and optional processing to the desired particle size, as described herein, the clumping animal litter of the invention is obtained. In a further preferred embodiment, the herein described sandwich method is also applied for the above described process for the production (see also examples below).

### Methods used to test the finished product

### Bulk density

For estimating the bulk density, a funnel may be used:
- Ø top funnel: 18 cm
- Ø bottom funnel: 2.6 cm
- Height funnel: 12.9 cm

Further, a measuring cup, which is placed under the bottom opening of the funnel:
- Ø measuring cup: 4.6 cm
- Height measuring cup: 7.5 cm
- Volume measuring cup: 124.6 ml

A representative sample of material is chosen. Representative means that the particle size distribution of the sample represents the particle size distribution of the batch of which the sample is taken (for instance with particles with a particle size range of 0.25-8 mm). The sample obtained may be "splitted" such that a number of representative samples are obtained with a desired particle size range, such as for instance 0.25-8 mm (splitting is known in the art). For statistical reasons, more than one sample may be measured.

The bottom of the funnel is covered with a (plastic) tab. The funnel is filled with approx. 200 grams sample. The tab at the bottom of the funnel is removed, such that the measuring cup can be filled. The surface of product in the measuring cup is evened out by pulling the tab over de "head" of the measuring cup. Then the bulk density of the product is calculated by dividing the weight of the product in measuring cup by the volume of the measuring cup. Hence, the bulk density is measured of a sample having the desired particle size distribution, such as at least 90 wt. % of the particles of the particulate material having a particle size in the range of 0.25 and 8 mm (and the weight average particle size is also in the range of 0.25-8 mm).

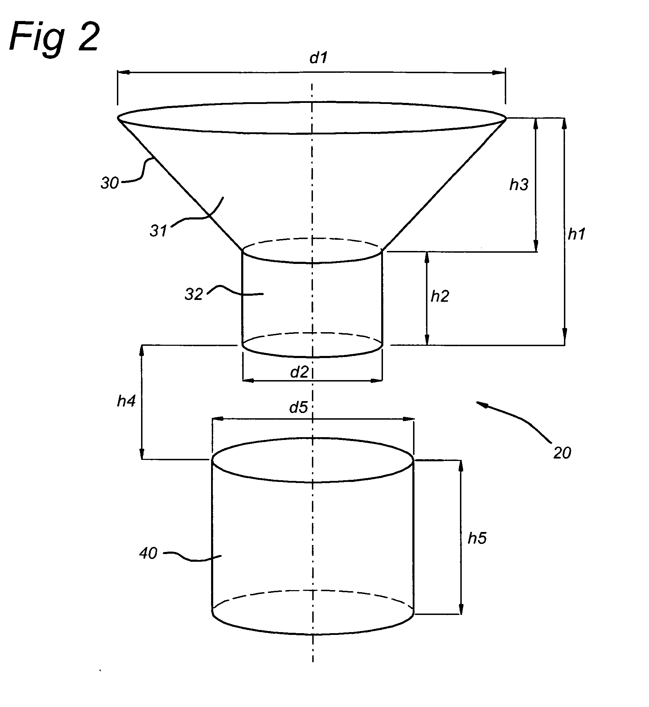

This method and arrangement for determining the bulk weight are substantially the same as ASTM Designation: D 1895-96 (Standard Test Methods for Apparent Density, Bulk Factor, and Pourability of Plastic Materials) (edition approved April 10, 1996, Published 1996), test Method A, "Apparent Density", pages 433-434, with the exception that particulate animal litter according to the invention is measured and with the exception of the dimensions of the measuring cup and funnel. This is illustrated in figure 2.

Figure 2, schematically shows setup 20 used for determining the bulk weight, which setup is similar to the setup shown in Figure 1 on page 434 of ASTM D 1895, with the exception that funnel 30 has a top internal diameter d1 of 18 cm, an upper part 31 with height h3 of 10.4 cm, and having the top internal diameter d1 of 18 cm and a lower internal diameter d2 of 2.6 cm, a lower part 32, with the lower internal diameter d2 of 2.6 cm and a height h2 of 2.5 cm. Funnel 30 thereby has a total height h1 of 12.9 cm. Funnel 30 may be one integral body (comprising of lower part 32 and upper part 31) made of stainless steel (or the like). Funnel 30 is arranged in arrangement 1 over measuring cup 40, having a height h5 of 7.5 cm, and a diameter d5 of 4.5 cm. The volume of measuring cup 40 is 124.6 ml. The distance between the bottom of funnel 30 and the top of measuring cup 40 is indicated with h4 and is 4.7 cm. The total height of setup 20 is thereby 25 cm.

### Particle size distribution

The particle size and particle size distribution is evaluated using a Retsch AS 200 sifting machine with ASTM sieves.

### Clump strength

The clump strength is measured using an automatic setup with a digital force meter as described above. The following parameters where used for measuring the clump strength:
- 5-7 cm thick layer of animal litter with particles in a predefined particle size range (as defined above);
- the animal litter material is evenly distributed such that a substantially "flat" layer is obtained;
- 10 ml 0.250 M NaCl solution (in water);
- harden time of the clump: 5 minutes (at ambient temperature);
- speed on force gauge 9 Inch/min.

### Moisture content

The moisture content is measured with a Mettler Toledo PB 153 at 110 °C. An aluminium scale is put on the machine, the machine is closed and the balance is tarred. After reopening, approx. 10 grams of sample is put on the aluminium scale. The machine is closed and the weight of the sample after evaporation of water can be evaluated after the weight has stabilized. By comparing the starting and final weight, the moisture content can be evaluated. The particles of the invention have a homogeneous appearance.

### Examples

### Specifications

The specifications of the standard bentonite are shown in the following tables:

**Table 1: Specifications for clumping cat litter (coarse: 0.25-8 mm particles)**

| | Standard Bentonite | Tolerance | Light weight bentonite | Tolerance |
|---|---|---|---|---|
| Bulk Density (g/l) | 960 | ± 50 | 450 | max. 700 |
| PH | 9.5 | 9-11 | 9,5 | 9-11 |
| Moisture % | 10 | max. 10.5 | 10 | max. 10.5 |
| Clump weight g/10ml | 35 | ± 5 | 25 | ± 5 |
| Clump strength (kg/cm2) | 450 | min. 400 | 450 | min. 400 |
| Airborne dust level (g/908g) | 0.1 | max. 0.150 | 0.1 | max. 0.15 |

| **Screen analyses** | | | | |
|---|---|---|---|---|
| 3,5 ASTM sieve | 0 wt.% | max. 0.2 | 0 wt.% | max. 0.2 |
| 4 ASTM sieve | 1 wt.% | max. 1.5 | 1 wt.% | max. 1.5 |
| 6 ASTM sieve | 30 wt.% | 22-35 | 30 wt.% | 22-35 |
| 10 ASTM sieve | 41.5 wt.% | ± 8 | 41.5 wt.% | ± 8 |
| 25 ASTM sieve | 25 wt.% | ± 5 | 25 wt.% | ± 5 |
| 60 ASTM sieve | 1.5 w.% | max. 2 | 1.5 wt.% | max. 2 |
| Dust < 60 | 1.0 wt.% | max. 1,5 | 1.0 wt.% | max. 1.5 |
| Total | 100 | | 100 | |

**Table 2: Specifications for clumping cat litter (ultra: 0.25-3 mm particles)**

| | Standard Bentonite | Tolerance | Light-weight bentonite | Tolerance |
|---|---|---|---|---|
| Bulk Density (g/l | 940 | ± 50 | 450 | max. 700 |
| PH | 9.5 | 9-11 | 9.5 | 9-11 |
| Moisture % | 10 | max. 10.5 | 10 | max. 10.5 |
| Clump weight g/10ml | 25 | ± 5 | 20 | ± 5 |
| Clump strength (kg/cm2) | 300 | min. 250 | 300 | min. 250 |
| Airborne dust level (g/908g) | 0.1 | max. 0.150 | 0,1 | max. 0.15 |

| **Screen analyses** | | | | |
|---|---|---|---|---|
| 7 ASTM sieve | 0 wt.% | max. 0.0 | 0 wt.% | max. 0.0 |
| 8 ASTM sieve | 0 wt.% | max. 0.2 | 0 wt.% | max. 0.2 |
| 12 ASTM sieve | 0.5 wt.% | max. 0.8 | 0.5 wt.% | max. 0.8 |
| 25 ASTM sieve | 82 wt.% | 74-90 | 82 wt.% | 74-90 |
| 40 ASTM sieve | 15 wt.% | ± 5 | 15 wt.% | ± 5 |
| 60 ASTM sieve | 1.2 wt.% | max. 1.5 | 1.2 wt.% | max. 1.5 |
| Dust < 60 | 1.3 wt.% | max. 2.0 | 1.3 wt.% | max. 2.0 |
| Total | 100 wt.% | | 100 wt.% | |

### 2. Material and Method

The following series of samples were studied:
EW1-7: samples based on egg white or BG8-9 based on bentonite gel as filler material, or EW19-23 samples based on foams other than egg white based foams (or bentonite gel foams). The preparation of these samples according to the invention is described below.

### Method to prepare samples with egg white (EW 1-7) and other protein based foams (EW 19-23)

### a. mixing a first starting materials and a second starting material

For sample EW3, a premix (first starting material) was made of 90 wt.% bentonite dust (< 0.1 mm Bulgarian) and 10 wt.% methylcellulose (Walcocel MKX 40000) by weighing 450 bentonite dust and 50 grams methylcellulose. The components were mixed for 3 minutes to homogenise the mixture. Egg white was separated from eggs and 170 g egg white was mixed (whisked) until a stable puffed up (whisked) foam was obtained (second starting material). 100 grams of the premix (first starting material) was dispersed on a flat plate to obtain a layer of this starting material. 170 g whisked egg white was dispersed on the layer of the first material to form a "foam" layer. Then, 100 grams of the first starting material was dispersed on the foam layer. In this way a kind of sandwich structure of first starting material - second starting material - first starting material was obtained. A mix was made of the starting materials. By mixing, larger particles are formed. In the experiment, mixing was terminated when particles achieved a particle size up to about 10 mm.

### b. drying the product obtained in step a)

The mixed product was dispersed on an oven plate and introduced in a preheated oven. The heating temperature was about 100 °C and the heating time was about 60 minutes. The heating time was controlled such that the desired water content was obtained (moisture content is about 10 wt.%). After heating, the particles were removed from the oven and cooled down to room temperature.

### c. further professing the product thus obtained to animals litter particles having a weight averaged particle size in the range of 0.25 - 8 mm.

The particles were crushed to the desired particle size. For instance, an Ottevanger Crusher (type BR 250/520) can be used. In laboratory experiments, a simple ice crusher was used. To achieve coarse bentonite, the particles were broken to a particle size of 7 mm. To achieve fine bentonite (ultra), the particles were crushed to 3 mm. A sieving step may be applied in order to obtain the desired particle size distribution. For instance, a desired particle size range is 0.25-8 mm (coarse), wherein at least 95 wt. % of particles in the litter material have a particle size in this range. In another embodiment (EW5) a desired particle size range is 0.25-3 mm (ultra), wherein at least 95 wt. % of particles in the litter material have a particle size in this range.

Most samples in the series of EW 1-7 were prepared likewise, using the amounts as specified in the table 3.

**Table 3: summary of samples and relevant process parameters EW 1-7 and EW19-23**

| Nr. | Weight of dust (gram) | Weight of coagulant (MC)¹ (gram) | Kind of binder | Amount of foam (gram) | Amount of bentonite dust for binder (gram) | Amount of water for binder (gram) | Drying time at 100 °C (min.) |
|---|---|---|---|---|---|---|---|
| EW1 | 300 | 15 | Egg protein | 170 | - | - | 60 |
| EW2 | 185 | 15 | Egg protein | 150 | - | - | 60 |
| EW3 | 185 | 15 | Egg protein | 170 | - | - | 60 |
| EW4 | 45 | 5 | Egg protein | 36 | - | - | 60 |
| EW5² | 185 | 15 | Egg protein | 170 | - | - | 60 |
| EW6³ | 185 | 15 | Egg protein | 170 | - | - | 60 |
| EW7 | 180 | 20 | Whole egg powder⁴ | | 56 | 114 | 60 |
| EW19 | 185 | 15 | Rheocell 20 ⁵ | 170 | | | 60 |
| EW20 | 185 | 15 | Mixoil⁶ | 170 | | | 60 |
| EW21 | 185 | 15 | Rheocell 20 | 170 | | | 60 |
| EW22 | 185 | 15 | Greenfroth ⁷ | 170 | | | 60 |
| EW23 | 185 | 15 | Lithofoam SL 200-L⁸ | 170 | | | 60 |

| | | | | | | | |
|---|---|---|---|---|---|---|---|
| 1: in these samples, methyl cellulose (MC) was used as coagulant; 2: all samples were mixed with a fork, except for sample 5, which was mixed using a kitchen mixer; sample 6 was sieved over a 6 mesh sieve (3.36 mm), to provide a "ultra" sample; 3: all samples are based on bentonite dust from Bulgarian origin, except for example 6, which is based on bentonite of Cypriotic origin; and 4: for instance from Vandenburg (whole egg powder is produced using only fresh hen's liquid whole egg which has been obtained by individually breaking of fresh eggs. The liquid whole egg is then pasteurised and finally spray dried). 5: From BASF (Rheocell 20 is based on methyldiproxitol) 6: From BASF (mixoil is based on lauryl ether sulphate (an alkyl ether sulphate)) 7: From Greenfroth (Greenfroth is a protein foaming agent, contains natural surfactants and is mixed with organic vegetable raw material) 8: From Dr. Lucà & Partner Ingernieurkontor GmbH (Lithofoam SL200-L is an protein substance, the proteins are enzymes which are produced by micro-organismes. | | | | | | | |

Two samples are discussed in more detail in the tables below:

### Starting materials for EW3:

| | Total weight before drying | % moisture before drying per product | weight dry matter before drying | Percentage dry matter |
|---|---|---|---|---|
| Bentonite dust | 185 | 10.3 | 165.9 | 80.8 |
| MC | 15 | 7.6 | 13.9 | 6.7 |
| Egg white | 170 | 84.9 | 25.7 | 12.5 |
| Total | 370 | | 205.5 | 100.0 |

In the final product, assuming a weight percentage of water of 10 wt.%, the following contents will be observed:

### Composition final product EW3:

| | Assume moisture percentage ready product 10%, thus dry matter 90% |
|---|---|
| Bentonite dust | 72.7 |
| MC | 6.1 |
| Egg white | 11.2 |
| Moisture | 10.0 |
| Total | 100.0 |

### Likewise for EW 23:

### Starting materials for EW23:

| | Total weight before drying | % moisture before drying per product | weight dry matter before drying | Percentage dry matter |
|---|---|---|---|---|
| Bentonite dust | 185 | 10.3 | 165.9 | 91.6 |
| MC | 15 | 7.6 | 13.9 | 7.7 |
| Lithofoam SL200-L | 170 | 99.25 | 1.28 | 0.7 |
| Total | 370 | | 181.1 | 100.0 |

### Composition final product EW23:

| | Assume moisture percentage ready product 10%, thus dry matter 90% |
|---|---|
| Bentonite dust | 82.5 |
| MC | 6.9 |
| Lithofoam SL200-L | 0.63¹ |
| Moisture | 10.0 |
| Total | 100.0 |

| | |
|---|---|
| ¹ this amount is the protein content in the total mixture derived from the lithofoam (i.e. the dry weight contribution by the lithofoam. | |

### 3. Results

**Table 5: A1-A8: prior art samples based on cat litter particles with a wooden core**

| Nr. | Bulk Density g/l | Clump strength kg/cm² |
|---|---|---|
| A1 | 574 | 330 |
| A2 | 597 | 314 |
| A3 | 619 | 302 |
| A4 | 616/622 | 238 |
| A5 | 586/584 | 240 |
| A6 | 576/579 | 268 |
| A7 | 606/574 | 291 |
| A8 | 608/607 | 383 |

**Table 6: Samples according to the invention EW 1-7 and BG 8-9 and EW19-23**

| Nr. | Bulk density (g/l) | Clump strength kg/cm² |
|---|---|---|
| EW2 | 560 | 560 |
| EW3 | 535 | 560 |
| EW5 | 560 | 810 |
| EW6 | 495 | 430 |
| EW7 | 462 | 285 |
| EW19 | 450 | 355 |
| EW20 | 457 | 210 |
| EW21 | 487 | 595 |
| EW22 | 455 | 605 |
| EW23 | 468 | 355 |

### Comparative example with sepiolite

Example EW3 was repeated with sepiolite from Benesa and was repeated with wood, in the form of wood particles having a size of about 1 mm or less. Low weight materials are obtained, but the products do not clump together upon contact with water.

### Example with soy protein

Example EW3 was repeated with soy egg protein, Versawhip 800, Kerry Bio Science. A particulate clumping animal litter was obtained with a bulk density of about 444 g/l and a clump strength of about 382 kg/cm².

### Examples with caseinate or chicken ovalbumin

A starting mixture of sodium caseinate and water, such that a composition is obtained of 50 wt.% sodium caseinate and 50 wt.% water, is made and subsequently whipped (filler material 1). Likewise, a starting mixture of chicken ovalbumin and water, such that a composition is obtained of 50 wt.% ovalbumin and 50 wt.% water, is made and subsequently whipped (filler material 2).

The respective filler materials (protein based foams) are mixed with bentonite dust. The mixture is dried. The dried mixture is further processed to obtain the animal litter particles having a weight averaged particle size in the range of 0.25-8 mm.

The samples of the invention in general have a lower bulk density and a better clump strength than light weight clumping cat litter known in the art.

It should be noted that the above-mentioned embodiments illustrate rather than limit the invention, and that those skilled in the art will be able to design many alternative embodiments without departing from the scope of the appended claims. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage. In an embodiment, the term "comprise" especially refers to "consist".

## Claims

1. A particulate clumping animal litter material comprising 50-95 wt.% bentonite dust, wherein the particles of the particulate clumping animal litter material have a weight averaged particle size in the range of 0.25-8 mm, **characterized in that** the particulate clumping animal litter material has a bulk density equal to or less than 700 gram/l and **in that** it comprises a filler material, and optionally a coagulant, said filler material comprising a protein based foam.

2. The particulate material according to claim 1, having a bulk density equal to or less than 550 gram/l.

3. The particulate material according to claims 1 or 2, wherein the bentonite dust comprises one or more clays selected from the smectite group consisting of beidellite, montmorillonite, nontronite, saponite, pyrophyllite, sauconite, and hectorite, preferably montmorillonite, more preferably Ca-bentonite.

4. The particulate material according to one of the preceding claims comprising 50-95 wt.% bentonite dust, 0.1-30 wt.% filler material, preferably 3-30 wt.% filler material, 1-15 wt.% coagulant and 1-15 wt.% water.

5. The particulate material according to one of the preceding claims, wherein the protein of the protein based foam is selected from the group consisting of animal proteins and plant proteins.

6. The particulate material according to one of the preceding claims, wherein the protein of the protein based foam comprises a plant protein selected from the group consisting of soy, potato, maize, pea and cane proteins, especially soy protein.

7. The particulate material according to one claims 1-6, wherein the protein of the protein based foam comprises a poultry egg protein, such as chicken ovalbumin.

8. The particulate material according to one of the preceding claims, wherein the protein of the protein based foam comprises an enzyme, especially a globular enzyme.

9. The particulate material according to one of the preceding claims, wherein the filler material comprises whisked egg white.

10. The particulate material according to one of the preceding claims, wherein the coagulant comprises one or more materials selected from the group consisting of methylcellulose (MC) and carboxymethylcellulose (CMC) or the salts thereof.

11. A process for the production of a particulate clumping animal litter material comprising:
a. mixing a first starting material and a second starting material, the first starting material comprising bentonite dust, the bentonite dust having a weight averaged particle size equal to or less than 1 mm, and optionally a coagulant, and the second starting material comprising a filler material, wherein the filler material comprises a protein based foam;
b. drying the product obtained in step a); and
c. optionally further processing the product thus obtained to animal litter particles having a weight averaged particle size in the range of 0.25-8 mm.

12. The process according to claim 11, wherein the second starting material is obtainable by whisking egg white.

13. The process according to claim 11, wherein the protein based foam comprises an animal protein, especially an egg white foam.

14. The process according to claim 11, wherein the protein based foam comprises a plant protein, especially soy protein.

15. A particulate clumping animal litter material obtainable by the process according to one of claims 11-14.

16. Use of a foam for the production of a light weight particulate clumping animal litter material, wherein the foam comprises a protein based foam, especially whisked egg white.

## Patentansprüche

1. Teilchenförmiges, klumpenbildendes Tiereinstreumaterial, das 50-95 Gew.-% Bentonitstaub umfasst, wobei die Partikel des teilchenförmigen, klumpenbildenden Tiereinstreumaterials eine gewichtsgemittelte Teilchengröße im Bereich von 0,25-8 mm aufweisen, **dadurch gekennzeichnet, dass** das teilchenförmige, klumpenbildende Tiereinstreumaterial eine Schüttdichte von 700 Gramm/l oder weniger aufweist und einen Füllstoff und gegebenenfalls ein Koagulationsmittel aufweist, wobei der Füllstoff einen Schaum auf Proteinbasis umfasst.

2. Teilchenförmiges Material nach Anspruch 1, das eine Schüttdichte von 550 Gramm/l oder weniger aufweist.

3. Teilchenförmiges Material nach Anspruch 1 oder 2, wobei der Bentonitstaub ein oder mehrere Tone umfasst, die aus der Smektitgruppe bestehend aus Beidellit, Montmorillonit, Nontronit, Saponit, Pyrophyllit, Saukonit und Hectorit, bevorzugt Montmorillonit, besonders bevorzugt Ca-Bentonit, ausgewählt sind.

4. Teilchenförmiges Material nach einem der vorhergehenden Ansprüche, das 50-95 Gew.-% Bentonitstaub, 0,1-30 Gew.-% Füllstoff, bevorzugt 3-30 Gew.-% Füllstoff, 1-15 Gew.-% Koagulationsmittel und 1-15 Gew.-% Wasser umfasst.

5. Teilchenförmiges Material nach einem der vorhergehenden Ansprüche, wobei das Protein des Schaumes auf Proteinbasis aus der Gruppe bestehend aus Tierproteinen und Pflanzenproteinen ausgewählt ist.

6. Teilchenförmiges Material nach einem der vorhergehenden Ansprüche, wobei das Protein des Schaumes auf Proteinbasis ein Pflanzenprotein ausgewählt aus der Gruppe bestehend aus Soja-, Kartoffel-, Mais-, Erbsen- und Zuckerrohrprotein, insbesondere Sojaprotein, umfasst.

7. Teilchenförmiges Material nach einem der Ansprüche 1-6, wobei das Protein des Schaumes auf Proteinbasis ein Geflügeleiprotein, wie z.B. Hühnereialbumin, umfasst.

8. Teilchenförmiges Material nach einem der vorhergehenden Ansprüche, wobei das Protein des Schaumes auf Proteinbasis ein Enzym, insbesondere ein Globularenzym, umfasst.

9. Teilchenförmiges Material nach einem der vorhergehenden Ansprüche, wobei der Füllstoff gequirltes Eiweiß umfasst.

10. Teilchenförmiges Material nach einem der vorhergehenden Ansprüche, wobei das Koagulationsmittel ein oder mehrere Materialien umfasst, die aus der Gruppe bestehend aus Methylcellulose (MC) und Carboxymethylcellulose (CMC) oder deren Salzen ausgewählt sind.

11. Verfahren zur Herstellung eines teilchenförmigen, klumpenbildenden Tiereinstreumaterials, bei dem
a. ein erstes Ausgangsmaterial und ein zweiten Ausgangsmaterial gemischt werden, wobei das erste Ausgangsmaterial Bentonitstaub und gegebenenfalls ein Koagulationsmittel umfasst, wobei der Bentonitstaub eine gewichtsgemittelte Partikelgröße von 1 mm oder weniger aufweist, und das zweite Ausgangsmaterial einen Füllstoff umfasst, wobei der Füllstoff einen Schaum auf Proteinbasis umfasst;
b. das in Schritt a) erhaltene Produkt getrocknet wird; und
c. das so erhaltene Produkt gegebenenfalls zu Tiereinstreumaterialteilchen mit einer gewichtsgemittelten Teilchengröße im Bereich von 0,25-8 mm weiterverarbeitet wird.

12. Verfahren nach Anspruch 11, wobei das zweite Ausgangsmaterial durch Quirlen von Eiweiß erhältlich ist.

13. Verfahren nach Anspruch 11, wobei der Schaum auf Proteinbasis ein Tierprotein, insbesondere einen Eiweißschaum, umfasst.

14. Verfahren nach Anspruch 11, wobei der Schaum auf Proteinbasis ein Pflanzenprotein, insbesondere Sojaprotein, umfasst.

15. Teilchenförmiges, klumpenbildendes Tiereinstreumaterial, das durch ein Verfahren gemäß einem der Ansprüche 11-14 erhältlich ist.

16. Verwendung eines Schaumes für die Herstellung eines leichten, teilchenförmigen, klumpenbildenden Tiereinstreumaterials, wobei der Schaum einen Schaum auf Proteinbasis, insbesondere gequirlten Eiweißschaum, umfasst.

## Revendications

1. Un matériau particulaire agglomérant de litière d'animal comprenant de 50 à 95 % en poids de poussière de bentonite, dans lequel les particules du matériau particulaire agglomérant de litière d'animal ont une dimension de particule moyenne pondérée dans la plage de 0,25 à 8 mm, **caractérisé en ce que** le matériau particulaire agglomérant de litière d'animal a une masse volumique égale ou inférieure à 700 g/l et **en ce qu'**il comprend un matériau de charge, et optionnellement un coagulant, le matériau de charge comprenant d'une mousse à base de protéine.

2. Le matériau particulaire selon la revendication 1, ayant une masse volumique égale ou inférieure à 550 g/l.

3. Le matériau particulaire selon les revendications 1 ou 2, dans lequel la poussière de bentonite comprend une ou plusieurs argiles sélectionnées parmi le groupe de smectite constitué de beidellite, montmorillonite, nontronite, saponite, pyrophyllite, sauconite, et hectorite, de préférence montmorillonite, de manière plus préférée Ca-bentonite.

4. Le matériau particulaire selon l'une quelconque des revendications précédentes, comprenant 50 à 95 % poids de poussière de bentonite, 0,1 à 30 % en poids de matériau de charge, de préférence de 3 à 30 % en poids de matériau de charge, de 1 à 15 % en poids de coagulant et de 1 à 15 % en poids d'eau.

5. Le matériau particulaire selon l'une quelconque des revendications précédentes, dans lequel la protéine de la mousse à base de protéine est sélectionnée parmi le groupe constitué de protéines animales et de protéines végétales.

6. Le matériau particulaire selon l'une quelconque des revendications précédentes, dans lequel la protéine de la mousse à base de protéine comprend une protéine végétale sélectionnée parmi le groupe constitué de protéine de soja, de pomme de terre, de maïs, de pois et de canne, en particulier de protéine de soja.

7. Le matériau particulaire selon l'une quelconque des revendications 1 à 6, dans lequel la protéine de la mousse à base de protéine est comprend une protéine d'oeuf de volaille, telle que de l'ovalbumine de poule.

8. Le matériau particulaire selon l'une quelconque des revendications précédentes, dans lequel la protéine de la mousse à base de protéine comprend une enzyme, en particulier une enzyme globulaire.

9. Le matériau particulaire selon l'une quelconque des revendications précédentes, dans lequel le matériau de charge comprend du blanc d'oeuf battu.

10. Le matériau particulaire selon l'une quelconque des revendications précédentes, dans lequel le coagulant comprend un ou plusieurs matériaux sélectionnés parmi le groupe constitué de méthylcellulose (MC) et de carboxyméthylcellulose (CMC) ou des sels de ceux-ci.

11. Un procédé de production d'un matériau particulaire agglomérant de litière d'animal consistant à :
a. mélanger un premier matériau de départ et un second matériau de départ, le premier matériau de départ comprenant de la poussière de bentonite, la poussière de bentonite ayant une dimension de particule moyenne pondérée égale ou inférieure à 1 mm, et optionnellement un coagulant, et le second matériau de départ comprenant un matériau de charge, dans lequel le matériau de charge comprend une mousse à base de protéine ;
b. sécher le produit obtenu à l'étape a) ; et
c. optionnellement traiter en outre le produit ainsi obtenu en particules de litière d'animal ayant une dimension de particule moyenne pondérée dans la plage de 0,25 à 8 mm.

12. Le procédé selon la revendication 11, dans lequel le second matériau de départ peut être obtenu par du blanc d'oeuf battu.

13. Le procédé selon la revendication 11, dans lequel la mousse à base de protéine comprend une protéine animale, en particulier une mousse de blanc d'oeuf.

14. Le procédé selon la revendication 11, dans lequel la mousse à base de protéine comprend une protéine végétale, en particulier une protéine de soja.

15. Un matériau de litière d'animal agglomérant particulaire, pouvant être obtenu par le procédé selon l'une quelconque des revendications 11 à 14.

16. Utilisation d'une mousse pour la production d'un matériau particulaire agglomérant léger de litière d'animal, selon laquelle la mousse comprend une mousse à base de protéine, en particulier de blanc d'oeuf battu
